Europäisches Patentamt

European Patent Office

Office européen des brevets

(11) Numéro de publication : **0 309 352 B1**

(12) **FASCICULE DE BREVET EUROPEEN**

(45) Date de publication du fascicule du brevet :
06.05.92 Bulletin 92/19

(51) Int. Cl.$^5$ : **C02F 3/30, C02F 3/12, C02F 1/24**

(21) Numéro de dépôt : **88402387.0**

(22) Date de dépôt : **22.09.88**

(54) **Procédé et appareillage pour l'augmentation de la concentration des boues dans les stations d'épuration des eaux.**

(30) Priorité : **24.09.87 FR 8713180**

(43) Date de publication de la demande :
**29.03.89 Bulletin 89/13**

(45) Mention de la délivrance du brevet :
**06.05.92 Bulletin 92/19**

(84) Etats contractants désignés :
**AT BE CH DE ES FR GB GR IT LI LU NL**

(56) Documents cités :
**DE-A- 2 454 426
FR-A- 2 516 071
FR-A- 2 558 819
GB-A- 1 408 600
US-A- 4 488 968
DEGREMONT: "MEMENTO TECHNIQUE DE L'EAU", chapitre 11: "Procéds divers", 1972, TECHNIQUE ET DOCUMENTATION, Paris, FR**

(56) Documents cités :
**ABWASSERTECHNISCHE VEREINIGUNG,
"Lehr- und Handbuch der Abwassertechnik"
3éme édition, 4éme partie:
"Biologisch-chemische undweitergehende Abwasserreinigung", 1985, 877 pages, Ernst & Sohn, Berlin, DE
IDEM**

(73) Titulaire : **LYONNAISE DES EAUX Société Anonyme
52 rue de Lisbonne
F-75008 Paris (FR)**

(72) Inventeur : **Faup, Gérard
10 boulevard du Roi
F-78000 Versailles (FR)**
Inventeur : **Audic, Jean-Marc
41 bis Cours de Vincennes
F-75020 Paris (FR)**

(74) Mandataire : **Orès, Bernard et al
Cabinet ORES 6, Avenue de Messine
F-75008 Paris (FR)**

## Description

La présente invention est relative à un procédé et à un appareillage pour l'épuration biologique des eaux résiduaires, du type qui consiste à provoquer le développement d'une culture bactérienne dispersée sous forme de flocons -ou boues activées- dans des bassins de traitement des eaux, puis, après un temps de contact suffisant, à séparer par décantation (dans un clarificateur) l'eau épurée des boues, ces dernières étant recyclées dans l'un des bassins de traitement pour y maintenir une concentration suffisante en bactéries épuratrices, tandis que l'excédent, constitué par les boues secondaires en excès, est évacué du système. Ce type de procédé d'épuration vise à la fois à l'élimination de la pollution organique carbonée, par oxydation par l'oxygène dissous dans l'eau (libre ou lié) et à l'élimination de la pollution azotée sous toutes ses formes (protéines, acides aminés, urée et produits de décomposition, azote sous forme minérale, sels d'ammonium, notamment) par nitrification ou nitrification-dénitrification, la réduction des nitrates précédant la nitrification.

Or, il a été constaté que dans les procédés d'épuration utilisant les boues activées, l'étape limitante de la nitrification est non pas la cinétique de transformation du $NH_4$ en $NO_3$ (ou du N organique en $NO_3$) mais l'âge (ou temps de séjour réel) de la boue qu'il est nécessaire d'adopter pour conserver les micro-organismes nitrifiants dans la station d'épuration, et qui est, comme on le sait, très élevé en raison des temps de génération très longs des micro-organismes nitrifiants ; il en résulte que l'on doit prévoir pour les bassins d'aération, des volumes importants et surdimensionnés par rapport à la cinétique.

Plusieurs solutions ont été proposées pour diminuer ces volumes :

Il a par exemple été proposé d'augmenter la concentration de la biomasse en aération : si on désigne par A l'âge de la boue, V le volume d'aération, X la concentration moyenne en biomasse et X la production journalière de boues en excès, il est possible d'écrire l'équation suivante :

$$A = \frac{V \times X}{\Delta X}$$

Si l'on admet que $\Delta X$ est constant, le fait d'augmenter X permet alors de diminuer V. Mais dans une station d'épuration classique, la limite supérieure de X est rapidement atteinte, cas au-delà d'une concentration en biomasse de 5 à 6 g/l, le taux de capture du clarificateur devient insuffisant pour produire un effluent de qualité acceptable.

Pour augmenter encore la concentration de la biomasse en aération, il a été proposé un système comportant deux bassins séparés : un bassin dit de contact, où s'effectue la transformation de l'ammoniaque en nitrates (nitrification) et un bassin dit de stabilisation qui permet d'obtenir un âge de boues élevé. Dans ce cas, le bassin de contact présente une concentration de matière en suspension compatible avec l'opération de clarification pour obtenir un effluent de qualité convenable ; le bassin de stabilisation va pouvoir ainsi fonctionner avec une concentration en boue supérieure à celle du bassin de contact, ladite concentration étant égale à la concentration de la boue recyclée. Or, cette concentration de boue recyclée est liée directement au taux de recyclage. Si l'on adopte un taux de recyclage égal à 100 % du débit d'eau brute, ce qui est une valeur fréquemment adoptée, on arrive ainsi à une concentration en boue recyclée égale à deux fois la concentration en boue du bassin de contact, soit de l'ordre de 10 g/l. L'augmentation de la concentration des boues dans le bassin de stabilisation n'est cependant pas très importante par rapport à la concentration maximale autorisée dans une station d'épuration classique.

La Demande allemande DRAVO n° 2 454 426 décrit un procédé et une installation pour le traitement d'eaux brutes, par un processus de nitrification-dénitrification dans une zone de dénitrification anaérobie, avant le passage du mélange boues-eau traitée dans une zone d'aération puis séparation de l'eau traitée et des boues, au niveau d'une unité de clarification. Une partie des boues, qui est séparée au niveau de l'unité de clarification, peut optionnellement soit directement retourner à la zone d'aération précitée, soit être aérée dans une zone d'aération de boues, puis ensuite retourner dans la zone de dénitrification. Le reste des boues peut être conduit à un digesteur approprié, qui épaissit l'excès de boues avant de l'évacuer. Le problème que cherche à résoudre cette Demande DRAVO, est de traiter des eaux usées tout en produisant le minimum de boues.

Le Mémento technique DEGREMONT, aux pages 321 à 323 de l'édition de 1972, décrit les techniques de flottation par production de microbulle, en particulier par pressuration, pour la clarification d'un effluent.

On peut par ailleurs caractériser les réactions biologiques intervenant dans le traitement des eaux par deux grandeurs :
    – R, qui représente la cinétique de dégradation du substrat,
    – µ qui représente le taux de croissance des micro-organismes dans les conditions de la station.

En outre, tant pour le bassin réactionnel que pour le bassin de génération, il est possible de caractériser les volumes de ces bassins par différents paramètres.
    – En ce qui concerne le bassin réactionnel, si l'on pose :
Q      = débit de l'effluent à traiter

2

C $\quad$ = concentration du polluant à éliminer ($kg.m^{-3}$)

R $\quad$ = vitesse spécifique de dégradation du polluant ($kg.kg^{-1}$ MeS.$j^{-1}$)

$X_r$ $\quad$ = concentration en micro-organismes dans le bassin réactionnel (kg MeS.$m^{-3}$).

alors le volume Vr de ce bassin peut être traduit par l'équation suivante :

$$V_r = \frac{C \times Q}{R \times X_r}$$

– En ce qui concerne le bassin de génération, si l'on pose :

$\mu$ $\quad$ = taux de croissance des micro-organismes

A $\quad = \dfrac{1}{\mu} =$ âge de boue nécessaire à l'obtention de la réaction (j)

Xg $\quad$ = concentration en micro-organismes dans le bassin de génération (kg MeS.$m^{-3}$),

par définition, $\mu = \dfrac{1}{X} \times \dfrac{dX}{dt}$ (X étant la concentration en boue à l'entrée de l'ouvrage de clarification, en kg MeS.$m^{-3}$),

soit en régime permanent, $\mu = \dfrac{1}{X} \times \dfrac{X}{t}$,

avec une production journalière de boue Px égale à :

$$Px = \frac{X}{t} \times V$$

(V représentant le volume maximal du bassin réactionnel et du bassin de génération),

alors on peut poser l'équation suivante qui définit l'âge de boue :

$$A = \frac{Xg \times Vg}{Px} \qquad (1)$$

d'où le volume du bassin de génération Vg peut être traduit par l'équation suivante :

$$Vg = \frac{Px \times A}{Xg.}$$

La génération des micro-organismes se faisant aussi dans le bassin réactionnel, l'équation globale de l'âge de boue peut se traduire par la formule suivante :

$$A = \frac{(Xg \times Vg) + (Xr \times Vr)}{Px} \qquad (2)$$

Le volume total d'un système de traitement des eaux peut donc se traduire par la formule suivante :

$$V \text{ total} = Vg + Vr$$

Par ailleurs, en tenant compte de ce que les éléments A (âge de boue) et Px (production journalière de boue) sont définis par le polluant à éliminer et par la qualité de l'effluent à traiter, le paramètre qui conditionnera le bon fonctionnement de l'installation de traitement des eaux est le poids de boue en aération, définit par la multiplication de V par X.

Ce poids de boue en aération est, par définition, pour un système conventionnel, lié à l'équation suivante :

$$A = \frac{V \times X}{Px}, \text{ soit } V \times X = A \times Px \qquad (3)$$

(V x X correspond au poids de boue, V étant le volume d'aération et X la concentration en micro-organismes dans ce bassin).

Enfin, d'après l'équation (2) ci-dessus, on peut écrire l'égalité suivante :

$$(Xg \times Vg) + (Xr \times Vr) = A \times Px \qquad (4),$$

et, d'après les égalités (3) et (4), on peut écrire l'égalité suivante :

$$V \times X = Vg \times Xg + Vr \times Xr$$

Il est en conséquence du plus grand intérêt de pourvoir à un procédé et à un appareillage permettant d'augmenter la concentration des boues activées, dans une station d'épuration d'eau, la concentration obtenue étant sensiblement plus élevée que les concentrations obtenues par les procédés de l'Art antérieur, et permettant de réduire de façon considérable les volumes des bassins de traitement de ladite station.

La présente invention a également pour but de pourvoir à un procédé et à un appareillage particulièrement bien adaptés à l'élimination des pollutions carbonées, azotées et à la déphosphatation biologique.

La présente invention a pour objet un procédé de traitement des eaux par boues activées comprenant essentiellement :

- un processus de dépollution desdites eaux incluant :

. une étape d'oxydation des pollutions carbonées des eaux à traiter, sous conditions aérobies,

. une étape de nitrification desdites eaux sous conditions aérobies, pour produire un mélange d'eau traitée et de boues activées, éventuellement associée à une étape de dénitrification sous conditions anaérobies et/ou à une étape de déphosphatation sous conditions d'anaérobiose stricte, et

. une étape de séparation de l'eau traitée desdites boues activées, et

- un processus de production d'âge de boues, lequel procédé est caractérisé en ce qu'avant de recycler les boues dans au moins un processus de dépollution, il comprend :

. une étape de concentration desdites boues par flottation au moyen d'air comprimé, réalisée en amont du processus de production d'âge des boues.

Selon un mode de mise en oeuvre particulièrement avantageux du procédé conforme à la présente invention, comprenant une étape de nitrification, le processus de dépollution se déroule dans des conditions aérobies.

Selon un mode de mise en oeuvre particulièrement avantageux du procédé conforme à la présente invention, comprenant une étape de nitrification associée à une étape de dénitrification, le processus de dépollution se déroule successivement dans des conditions anaérobies pour l'étape de dénitrification, puis dans des conditions aérobies pour l'étape de nitrification.

Selon un mode de mise en oeuvre particulièrement avantageux du procédé conforme à la présente invention, comprenant une étape de déphosphatation, le processus de dépollution se déroule dans des conditions d'anaérobiose stricte pour l'étape de déphosphatation et dans des conditions aérobies pour les réactions de dépollution carbonée.

Selon un mode de mise en oeuvre particulièrement avantageux du procédé conforme à la présente invention, comprenant une étape de déphosphatation associée à une étape de nitrification, le processus de dépollution se déroule dans des conditions d'anaérobiose stricte pour l'étape de déphosphatation et dans des conditions aérobies pour l'étape de nitrification et pour les réactions de dépollution carbonée.

Selon un mode de mise en oeuvre particulièrement avantageux du procédé conforme à la présente invention, comprenant une étape de nitrification associée à une étape de dénitrification et/ou à une étape de déphosphatation, le processus de dépollution se déroule successivement dans des conditions d'anaérobiose stricte pour l'étape de déphosphatation, des conditions anaérobies pour l'étape de dénitrification et des conditions aérobies pour l'étape de nitrification et pour les réactions de dépollution carbonée.

Selon un mode de mise en oeuvre avantageux du procédé conforme à la présente invention, l'étape de concentration des boues est réalisée en mettant en oeuvre la technique de la flottation.

Selon une disposition avantageuse de ce mode de mise en oeuvre, la flottation est réalisée par pressurisation directe ou indirecte de l'eau à traiter, à l'aide d'air comprimé.

Selon une autre disposition avantageuse de ce mode de mise en oeuvre, la phase de boues concentrées est recyclée dans une étape d'initiation se déroulant dans des conditions d'anaérobiose stricte, dans laquelle l'oxygène desdites boues est épuisé.

Selon un mode de mise en oeuvre du procédé conforme à la présente invention, comprenant une étape de nitrification éventuellement associée à une étape de dénitrification, au moins une étape de genération se déroule dans des conditions aérobies.

Selon une disposition avantageuse de ce mode de mise en oeuvre, pour son application à l'étape de nitrification, les boues concentrées de l'étape de génération sont recyclées directement dans au moins un processus de dépollution.

Selon une autre disposition avantageuse de ce mode de mise en oeuvre, pour son application à l'étape de dénitrification associée à l'étape de nitrification, les boues concentrées de l'étape de génération sont diluées par mélange avec de l'eau brute dans des conditions d'anoxie dans lesquelles elles réalisent un processus de réduction des nitrates en azote gazeux, préalablement à leur recyclage dans au moins un processus de dépollution.

Selon un autre mode de mise en oeuvre avantageux comprenant une étape de déphosphatation, les boues concentrées initiées dans des conditions d'anaérobiose stricte sont introduites dans une charge d'eau brute à traiter, dans des conditions anaérobies, préalablement à leur recyclage dans au moins un processus de dépollution.

La présente invention a également pour objet une installation ou station d'épuration d'eau comprenant :

– au moins un bassin de réaction dans lequel se déroulent des réactions de dépollution carbonée des eaux à traiter,

– au moins un clarificateur dans lequel les boues et l'eau épurée sont séparées,

– au moins un bassin de génération et/ou d'initiation, dans lequel est réalisé l'âge des boues et/ou l'initiation propre à permettre la déphosphatation biologique,

laquelle installation est caractérisée en ce qu'elle comprend en outre au moins un appareillage de concentration des boues, monté en boucle entre au moins un bassin réactionnel et au moins un bassin de génération et/ou d'initiation, sur la ligne de traitement des eaux.

Le volume total de l'installation, ou station, d'épuration d'eau peut être traduit par la formule suivante :

$$V \text{ total } = V - Vg (FC - 1)$$

dans laquelle :

$$V = \frac{A \times Px}{X}, \quad Vg = \frac{A \times Px}{Xg} \quad \text{et} \quad FC = \frac{V - Vr}{Vg}$$

avec :

$$Vr = \frac{C \times Q}{R \times Xr} \quad \text{et} \quad A = \frac{(Xg \times Vg) + (Xr \times Vr)}{Px}$$

avec :

A = âge de boue nécessaire à l'obtention de la réaction (j)

Px = production de boue journalière (kg MeS.j$^{-1}$)

Xg = concentration en boue dans le bassin de génération (kg MeS.m$^{-3}$)

Xr = concentration en boue dans le bassin de réaction (kg MeS.m$^{-3}$)

X = concentration en boue à l'entrée de l'ouvrage de clarification (kg MeS.m$^{-3}$)

Q = débit sur l'installation

C = concentration du polluant à éliminer (kg.m$^{-3}$)

R = vitesse spécifique de dégradation du polluant (kg.kg$^{-1}$ MeS.j$^{-1}$)

Selon un mode de réalisation avantageux de l'appareillage conforme à la présente invention, le moyen de concentration desdites boues est constitué par au moins un flottateur.

Selon une disposition avantageuse de ce mode de réalisation, appliqué à la nitrification et/ou à la dénitrification, le ou au moins un flottateur est associé à au moins un bassin de génération fonctionnant dans des conditions aérobies.

Selon une autre disposition avantageuse de ce mode de réalisation, appliqué à la dénitrification, le ou au moins un bassin de génération est associé à une zone d'anoxie, placée en tête de la station d'épuration d'eau.

Selon encore une autre disposition avantageuse de ce mode de réalisation, appliqué à la déphosphatation, le ou au moins un flottateur est associé avec au moins un bassin d'initiation fonctionnant dans des conditions d'anaérobiose stricte, lequel bassin est relié à un bassin fonctionnant dans des conditions anaérobies, placé en tête de la station d'épuration d'eau.

Selon un mode de réalisation avantageux de l'appareillage conforme à la présente invention, appliqué à la nitrification et/ou la dénitrification associées(s) à la déphosphatation, au moins un flottateur est associé avec au moins un bassin de génération fonctionnant dans des conditions aérobies et avec au moins un bassin d'initiation fonctionnant dans des conditions anaérobies.

Selon un mode de réalisation avantageux de l'appareillage conforme à la présente invention, appliqué à la nitrification et/ou la dénitrification associée(s) à la déphosphatation, ledit appareillage comprend la combinaison d'au moins un flottateur associé à au moins un bassin de génération fonctionnant dans des conditions aérobies, avec au moins un flottateur associé à au moins un bassin d'initiation fonctionnant dans des conditions anaérobies.

Selon une disposition avantageuse de ce mode de réalisation, les bassins de génération et/ou d'initiation sont alimentés simultanément en boues concentrées recyclées du flottateur.

Selon une autre disposition avantageuse de ce mode réalisation, les bassins de génération et/ou d'initiation sont alimentés en alternance en boues concentrées recyclées du flottateur.

Selon un mode de réalisation avantageux de l'appareillage conforme à la présente invention, un bac de floculation est prévu entre le bassin de contact et le clarificateur.

Selon une disposition avantageuse de ce mode de réalisation, le bac de floculation est associé avec au moins un flottateur.

L'invention sera mieux comprise à l'aide du complément de description qui va suivre qui se réfère aux dessins annexés dans lesquels :

La Figure 1 est un schéma d'une station d'épuration d'eau pourvue d'un appareillage de concentration des boues activées conforme à l'invention, en association avec une zone de nitrification.

La Figure 2 est un schéma d'une station d'épuration pourvue d'un appareillage de concentration des boues activées conforme à l'invention, associés à une zone de nitrification et à une zone de dénitrification.

La Figure 3 représente schématiquement un mode de réalisation dans lequel l'appareillage conforme à l'invention est associé à une zone de déphosphatation.

La Figure 4 représente schématiquement un mode de réalisation dans lequel l'appareillage conforme à l'invention est associé à une zone de nitrification et à une zone de déphosphatation.

La Figure 5 représente schématiquement un mode de réalisation dans lequel l'appareillage conforme à l'invention est associé à une zone de nitrification, à une zone de dénitrification et à une zone de déphosphatation.

Le complément de description qui va suivre se réfère également à des exemples de mise en oeuvre du procédé de concentration de boues activées conforme à la présente invention.

Il doit être bien entendu, toutefois, que les exemples qui vont suivre, ainsi que les dessins annexés et les parties descriptives correspondantes, sont donnés uniquement à titre d'illustration de l'objet de l'invention, dont ils ne constituent en aucune manière une limitation.

L'appareillage conforme à la présente invention comprend au moins un bassin réactionnel 1 relié à un clarificateur 2. Au moins un flottateur 3 est monté en boucle entre au moins un bassin réactionnel 1 et au moins un bassin de génération et/ou d'initiation 4. Il est prévu en outre un bac de floculation 5 entre le bassin réactionnel 1 et le clarificateur 2.

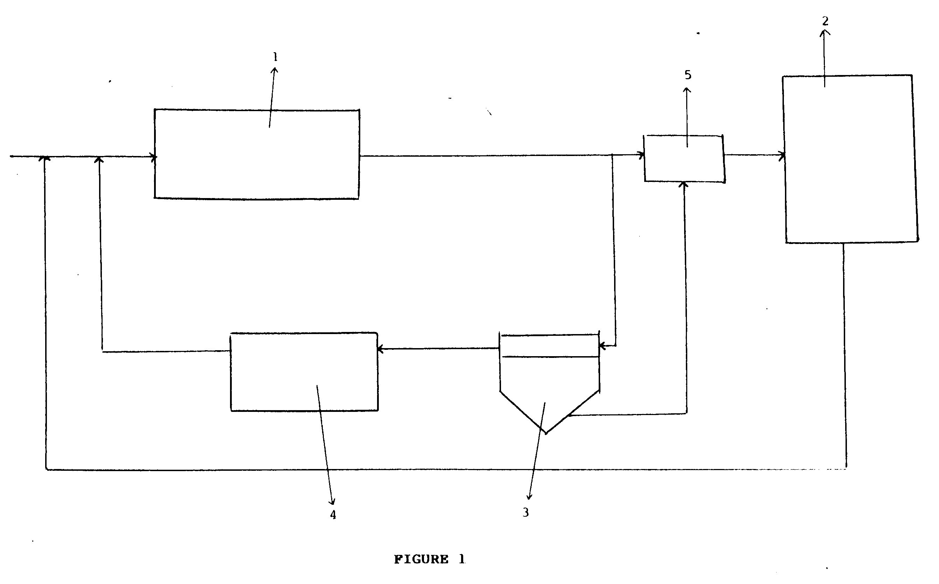

Dans le cas d'un appareillage appliqué à la nitrification (Figure 1), le recyclage des boues concentrées du bassin de génération 4 se fait directement dans le bassin réactionnel 1.

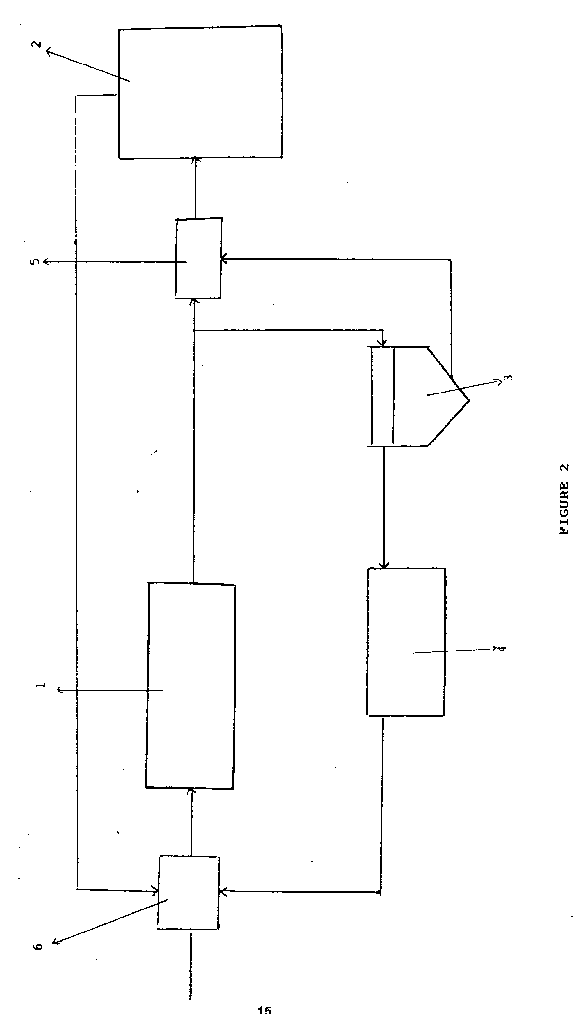

En ce qui concerne la dénitrification (Figure 2), il est nécessaire de placer en tête de la station une zone d'anoxie 6 dans laquelle les boues concentrées du bassin de génération 4 sont envoyées avant d'être recyclées dans le bassin réactionnel 1.

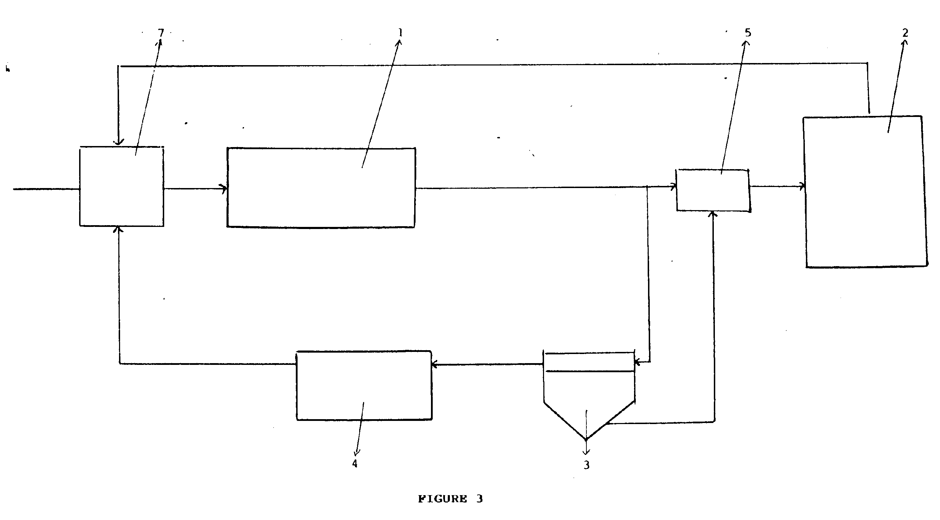

Enfin, pour ce qui est de la déphosphatation (Figure 3), les boues concentrées du bassin d'initiation 4 sont envoyées, préalablement à leur recyclage dans le bassin réactionnel 1, dans un bassin 7 qui fonctionne en anaérobiose.

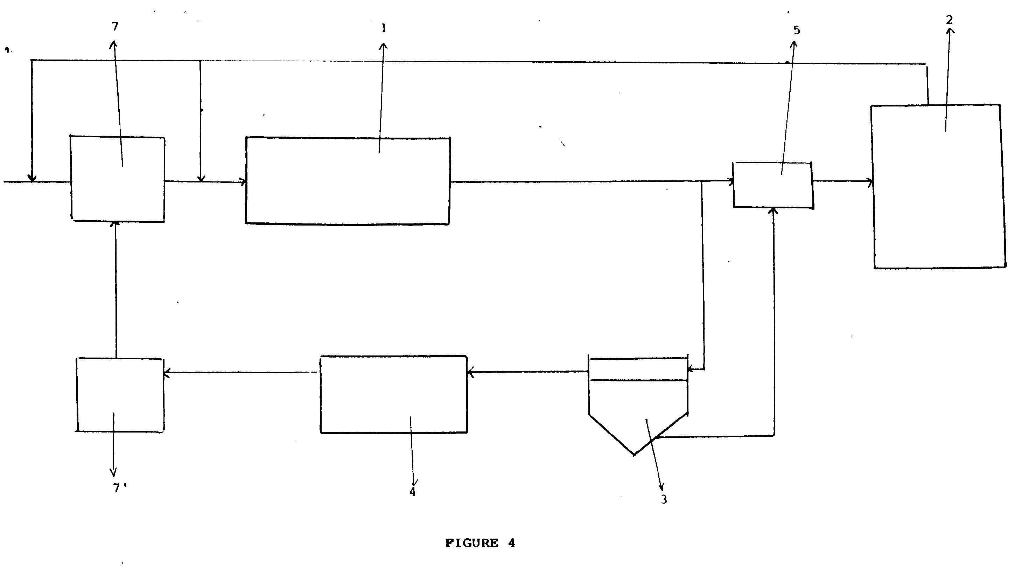

Lorsqu'un appareillage conforme à l'invention est appliqué à la nitrification associée à la déphosphatation (Figure 4), le bassin de génération et/ou d'initiation 4 est associé à un premier bassin 7′ qui fonctionne en anaérobiose, lequel est relié au bassin 7.

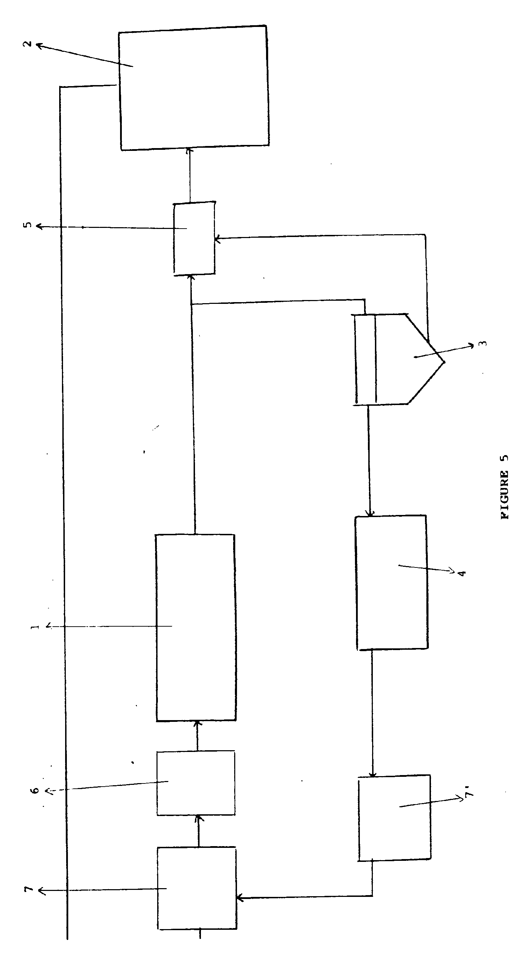

Quand la nitrification est associée à la dénitrification et à la déphosphatation, l'appareillage selon l'invention (Figure 5) comprend le bassin de génération et/ou d'initiation 4 associé à la fois au bassin 7′, lequel est relié au bassin 7, et à la zone d'anoxie 6.

Le fonctionnement d'un appareillage conforme à la présente invention, par exemple appliqué à la nitrification (Figure 1), est le suivant : l'eau brute est envoyée dans un bassin réactionnel 1 qui contient des boues activées, et est brassée avec les bactéries en fournissant une quantité d'oxygène nécessaire à la prolifération desdites bactéries pour retenir la pollution organique ; le mélange boueux est ensuite envoyé dans un clarificateur 2 afin de séparer les boues de l'eau épurée. Quand la concentration en boues dans le clarificateur 2 est telle que le taux de capture du clarificateur n'assure plus une qualité de l'effluent suffisante (par exemple 5-6 g/l), l'excès de boues du bassin 1 alimente alors au moins un flottateur 3 qui va concentrer les boues. Le flottateur 3 n'utilise pas d'agent de flottation, la flottation se faisant par dissolution d'air sous forme de bulles dans l'eau à traiter ; la pressurisation de l'eau peut se faire de manière directe ou indirecte à une pression d'environ 4-5 bars. Le sous-nageant du flottateur 3, composé de l'effluent, est renvoyé dans le clarificateur 2, par l'intermédiaire d'un bac de floculation 5. Le surnageant du flottateur, composé de boues concentrées, est envoyé dans un bassin de génération 4, fonctionnant dans des conditions aérobies, puis les boues concentrées sont recyclées vers le bassin réactionnel 1, parallèlement au recyclage dans le même bassin de boues décantées dans le clarificateur 2.

En ce qui concerne la dénitrification associée à la nitrification, le fonctionnement de l'appareillage conforme à l'invention (Figure 2) est le même que décrit précédemment, la seule différence étant l'incorporation en tête de station d'une zone d'anoxie 6 dans laquelle sont envoyées à la fois les boues du bassin de génération 4 fonctionnant en anaérobiose, et celles du clarificateur 2, préalablement à leur recyclage. Cette zone d'anoxie permet de réduire les nitrates en azote gazeux, laquelle réduction est effectuée en absence d'oxygène et en présence du carbone organique de l'eau.

Enfin, en ce qui concerne la déphosphatation (Figure 3), les boues concentrées du flottateur 3 sont envoyées dans un bassin d'initiation 4 fonctionnant dans des conditions d'anaérobiose stricte afin d'épuiser l'oxygène desdites boues ; puis les boues concentrées sont introduites dans une charge d'eau brute à traiter, dans un bassin 7 fonctionnant en anaérobiose, en tête de la station, parallèlement aux boues décantées du clarificateur, les boues étant ensuite recyclées vers le bassin de contact 1.

L'augmentation de la concentration en boues activées, avant leur recyclage, permet de diminuer fortement les volumes d'aération nécessaires, en particulier pour le processus de nitrification.

Exemple 1 : Comparaison entre un système d'épuration des eaux conventionnel et celui de la présente invention.

En comparaison avec une installation d'épuration des eaux conventionnelle, il est possible de quantifier le pourcentage de volume gagné des bassins réactionnels et de génération.

Dans la majorité des cas, l'étape limitante, donc celle faisant le volume, est l'étape de génération et/ou d'initiation.

D'après l'équation $V = \dfrac{A \times Px}{X}$

on en déduit :

$$\frac{X \times V}{Px} = \frac{(Xg \times Vg) + (Xr \times Vr)}{Px}$$

ce qui est équivalent à :

$$X \times V = (Xg \times Vg) + (Xr \times Vr)$$

d'où :

$$V = \frac{Xg}{X} Vg + \frac{Xr}{X} Vr$$

Le volume total de la station d'épuration des eaux étant égal à Vg + Vr, on en déduit :

$$V\ total = V - \left| \frac{Xg - X}{X} Vg + \frac{Xr - X}{X} Vr \right|$$

Il est évident que plus Vg et plus Xg sont grands, plus le gain de volume sur la station d'épuration des eaux sera important.

Xg dépendant de l'étape de concentration et

Vg dépendant du taux de croissance de la biomasse, le terme $\frac{Xg - X}{X} Vg + \frac{Xr - X}{X} Vr$ correspondant donc au gain du procédé conforme à la présente invention par rapport au procédé conventionnel. En utilisant les équations :

$$Vr = \frac{C \times Q}{R \times Xr} \ et \ A = \frac{(Xg \times Vg) + (Xr \times Vr)}{Px}$$

il peut s'écrire :

$$T = A \times Px \left| \frac{Xg - X}{X \times Xg} \right| - \frac{C \times Q}{R \times Xr} \left| \frac{Xg - Xr}{Xg} \right|$$

d'où le pourcentage de volume gagné par rapport au procédé conventionnel : $\frac{T}{V}$

soit :

$$\frac{T}{V} = \frac{R \times Xr \times A \times Px (Xg - X) - C \times Q \times X (Xg - Xr)}{R \times Xr \times A \times Px \times Xg}$$

Pour la nitrification, la gain de volume par rapport au procédé conventionnel est (pour les exemples de dimensionnement ci-dessus) :

$$\frac{T}{V} = \frac{0,054 \times 6,1 \times 12,2 \times 1440 (30-4) - 400 \times 4 (30-6,1)}{0,054 \times 6,1 \times 12,2 \times 1440 \times 30} = 65\%$$

Exemple 2 : Gain des volumes des bassins d'aération d'une station d'épuration d'eau obtenu, grâce à la concentration des boues par un flottateur, dans le cas de l'étape de la nitrification.

1 - On a comparé le volume d'aération nécessaire aux micro-organismes nitrifiants entre un procédé conventionnel et un procédé utilisant un flottateur (cf. Exemple 1).

Les valeurs de base qui ont été choisies pour cette expérience sont les suivantes :
– Débit d'eau brute traité (Q) : 10 000 m³. j⁻¹
– Demande biologique en oxygène (DBO) : 2 000 kg.j⁻¹
– Natrium Titration Kalium (NTK) : 473 kg.j⁻¹
– Matière en suspension (MeS) : 2 000 kg.j⁻¹
– Température minimum : 13°C
– Pas de décanteur primaire.

L'âge de boue nécessaire à la nitrification, pour une température de 13°C, est de 12,2 jours.

La production de boues en excès, pour un rapport MeS/DBO = 1, permet d'obtenir 0,72 kg MeS.kg⁻¹, soit : 1 440 kg.j⁻¹·

2 - En procédé conventionnel, et en prenant une concentration en boues de 4g.l⁻¹ en aération, on obtient un volume d'aération de 4 400 m³.

3 - Avec le procédé utilisant un flottateur, il faut considérer les volumes d'aération à la fois du bassin de génération, du bassin d'aération et du flottateur.

Le bassin d'aération est dimensionné uniquement sur la cinétique de nitrification.

Si on prend 6,1 g.l⁻¹ de MeS à 75 % de MV (matières volatiles), la cinétique peut s'établir à : 3 mg $N-NH_4$ nitrifié/g⁻¹ MVS.h⁻¹, soit 13,6 mg $N-NH_4$ l⁻¹.h⁻¹.

La quantité d'azote évacué dans les boues en excès est de : 1 440 x 0,75 x 0.07 = 75,6 kg.j⁻¹.

La quantité d'azote à nitrifier, en supposant la nitrification complète, est de : 473-75,6 = 400 kg.j⁻¹ environ.

On obtient un volume d'aération nécessaire de 1 235 m³.

Le bassin de génération est dimensionné pour obtenir l'âge de boues nécessaire.

On admet que la production de boues en excès est la même que dans le procédé conventionnel, soit 1 440 kg.j⁻¹.

La masse de boue nécessaire est de 17 570 kg ; en aération la masse de boue nécessaire est égale à :

$$1\ 235 \times 6,1 = 7\ 530 \text{ kg.}$$

Il faut donc en génération une masse de boue égale à 17 570 - 7 530, soit 10 000 kg environ.

La concentration de boues en génération obtenue étant d'environ 30 g.l⁻¹, le volume de génération nécessaire est alors égal à 10 000/30 = 330 m³.

Le volume total des bassins nécessaire est donc de 1 235 + 330, ce qui équivaut à 1 565 m³. Le gain de volume par le procédé de la présente invention par rapport au procédé conventionnel est supérieur à 64 %, mais il faut également tenir compte du fait qu'il est nécessaire de prévoir en plus un flottateur.

Pour calculer la surface de flottation nécessaire, on procède comme suit : le débit transitant par le flottateur est par convention égal au débit d'eau brute, soit 10 000 m³.j⁻¹, à 6,1 g.l⁻¹ de concentration en boues.

Si l'on admet une charge de 6 kg.m⁻².h⁻¹, cela correspondant à une surface de flottation de 10 000 x 6,1/(24x6) : 416 m².

Exemple 3 : Gain des volumes des bassins d'aération d'une station d'épuration d'eau obtenu, grâce à la concentration des boues par un flottateur, dans le cas de l'étape de la nitrification associée à l'étape de dénitrification.

1 - On a comparé le volume d'aération nécessaire aux micro-organismes nitrifiants et dénitrifiants entre un procédé conventionnel et un procédé utilisant un flottateur (cf. Exemple 1).

Les valeurs de base qui ont été choisies pour cette expérience sont les suivantes :

– Débit d'eau brute traitée (Q) : 10 000 m³.j⁻¹
– Demande biologique en oxygène (DBO) : 2 000 kg.j⁻¹
– Natrium Titration Kalium (NTK) : 473 kg.j⁻¹
– Matière en suspension (MeS) : 2 000 kg.j⁻¹
– Température minimum : 13°C
– Pas de décanteur primaire.

L'âge de boue nécessaire à la nitrification, pour une température de 13°C, est de 12,2 jours.

La production de boues en excès, pour un rapport MeS/DBO = 1, permet d'obtenir 0,72 kg MeS.kg⁻¹ DBO éliminée, soit 1 440 kg.j⁻¹.

Pour ce qui est de la nitrification, on suit la procédure de l'Exemple 2.

En ce qui concerne la dénitrification, on procède comme suit :

2 - En procédé conventionnel, et en prenant une concentration en boues de 4 g.l⁻¹ en aération, on obtient un volume d'aération de 4 400 m³.

Le bassin d'aération est dimensionné uniquement sur la cinétique de nitrification.

Si on prend 4 g.l⁻¹ de MeS à 75 % de MV (matières volatiles), la cinétique peut s'établir à : 3 mg $N-NO_3$ nitrifié.g⁻¹ MVS.h⁻¹, soit 9 mg $N-NO_3$.l⁻¹.h⁻¹.

La quantité d'azote évacué dans les boues en excès est de : 1 440 x 0,75 x 0,07 = 75,6 kg.j⁻¹.

La quantité d'azote à nitrifier, en supposant la nitrification complète, est de : 473-75,6 = 400 kg.j⁻¹ environ.

On obtient un volume d'aération nécessaire de 1 235 m³.

La quantité de $N-NO_3$ à dénitrifier, en tenant compte d'un recyclage de 400 % par rapport à une quantité égale à 2Q, est de 300 kg.j⁻¹, ce qui permet d'obtenir un volume du bassin d'amenée de 1 390 m³.

3 - Avec le procédé utilisant un flottateur, il faut considérer à la fois les volumes d'aération des bassins de génération, d'aération et du flottateur. Le volume du bassin d'aération étant de 1 235 m³ et celui du bassin d'anoxie, calculé comme précédemment avec 13,6 mg de $N-NO_3$.l⁻¹.h⁻¹ étant de 920 m³, le volume total des bassins (suivant la procédure de l'Exemple 2) est donc de 1 235 + 920 + 330, ce qui équivaut à 2 485 m³.

Le gain de volume obtenu par le procédé en instance par rapport aux procédés conventionnels est supérieur à 57 %.

Exemple 4 : Gain des volumes des bassins d'aération d'une station d'épuration d'eau obtenu, grâce à la concentration des boues par un flottateur, dans le cas de l'étape de déphosphatation.

1 - Dans cet exemple, le bassin de génération est en condition anaérobie stricte. Ce bassin n'intervient pas dans le calcul d'âge de boue. Par contre, comme dans l'exemple précédent, ce bassin va permettre de maintenir dans le bassin aéré une concentration en boue plus importante.

En supposant que la quantité de carbone réellement dégradée ($CO_2$) dans la zone anaérobie soit faible, la charge en $DBO_1$ est de 2 000 kg.$j^{-1}$.

En prenant une charge massique > 0,5 kg DBO.$kg^{-1}$ MeS.$j^{-1}$ et en conservant la valeur de concentration en boue précédente, le volume d'aération sera de :

$$\frac{2\,000}{0,5 \times 6,1} = 655 \text{ m}^3$$

2 - Calcul du volume du bassin d'aération anaérobie.

D'après le procédé conforme à l'invention, le débit d'admission sur le bassin de génération est de 48 m³.$h^{-1}$.

Pour quatre heures de temps de réponse, on obtient un volume du bassin d'aération anaérobie de 190 m³.

3 - Calcul du volume du bassin d'aération anaérobie placé en tête de la station d'épuration d'eau.

Pour quatre heures de temps de séjour (le séjour de stabilisation ayant suffisamment initié la réaction pour que le temps de séjour dans ce bassin soit plus court et la réaction de production d'acétate et de stockage du PHB n'étant pas limitante), on obtient un volume du bassin d'aération anaérobie de 1 666 m³.

Pour un temps de séjour de deux heures, dans ces mêmes conditions, on obtient un volume d'aération anaérobie de 835 m³.

Le gain du volume des bassins de la station d'épuration des eaux par le procédé conforme à l'invention par rapport aux procédés conventionnels est d'environ 37 %.

Exemple 5 : Gain des volumes des bassins d'aération d'une station d'épuration d'eau obtenu, grâce à la concentration des boues par un flottateur, appliqué à l'étape de nitrification et à l'étape de déphosphatation.

1 - On reprend la même procédure que dans les exemples précédents.

Par ailleurs, d'après l'Exemple 2, la concentration en nitrate dans la liqueur mixte sortant du bassin d'aération est d'environ 40 mg.$l^{-1}$, concentration qui sera identique dans le bassin de stabilisation aérobie.

2 - Dans le cas de la stabilisation anaérobie, le nitrate sera réduit par dénitrification endogène, réduction dont la vitesse est comprise dans les valeurs suivantes de 0,6 à 0,8 mg N-$NO_3$.$g^{-1}$MVS.$h^{-1}$.

Compte tenu de la concentration en boue dans le bassin de stabilisation (30 kg.$m^{-3}$), la complète réduction du nitrate est atteinte après environ deux heures de temps de séjour, permettant ainsi le retour de boue exempte de nitrate vers le bassin anaérobie en tête de la station d'épuration des eaux.

3 - Le dimensionnement de la station d'épuration des eaux, obtenu par le procédé conforme à l'invention est le suivant :
– Volume du bassin d'aération : 1 235 m³,
– Volume du bassin de stabilisation aérobie : 330 m³,
– Volume du bassin de stabilisation anaérobie : 190 m³,
– Volume du bassin d'anaérobiose : 835 m³.

Le gain du volume des bassins de la station d'épuration des eaux par le procédé en instance par rapport aux procédés conventionnels est environ 57 %.

Exemple 6 : Gain des volumes des bassins d'aération d'une station d'épuration des eaux obtenu, grâce à la concentration des boues par un flottateur, appliqué à l'étape de nitrification associée à l'étape de dénitrification et à l'étape de déphosphatation.

1 - On reprend la même procédure que dans les exemples précédents.

2 - Le dimensionnement des bassins de la station d'épuration des eaux obtenus par le procédé en instance est le suivant :
– Volume du bassin d'aération : 1 235 m³,
– Volume du bassin d'anoxie : 920 m³,
– Volume du bassin de stabilisation aérée : 330 m³,
– Volume du bassin de stabilisation anaérobie : 190 m³,
– Volume du bassin d'anaérobiose : 835 m³,
– Volume total de la station d'épuration des eaux : 3 510 m³,

3 - En comparaison, avec les procédés conventionnels, on obtient, comme dimensionnement des bassins de la station d'épuration des eaux, les valeurs suivantes :
– Volume du bassin d'aération : 4 400 m³,
– Volume du bassin d'anaxie : 1 390 m³,
– Volume du bassin d'anaérobiose : 1 666 m³,
– Volume total de la station d'épuration des eaux : 7 456 m³.

Le gain du volume des bassins de la station d'épuration des eaux par le procédé en instance par rapport aux procédés conventionnels est d'environ 53 %.

Exemple 7 : Avantage de l'utilisation du procédé et de l'appareillage de la présente Invention.

La réduction des volumes d'aération d'une station d'épuration des eaux, comme montré dans les exemples ci-dessus, est réalisée grâce à la concentration des boues activées par un flottateur monté en boucle entre le bassin d'aération et le bassin de génération et/ou d'initiation. Ledit flottateur, dans lequel la pressurisation de l'eau est réalisée de manière directe ou indirecte, est alimenté avec des boues activées à une concentration d'environ 4 à 5g.l⁻¹ ce qui permet un taux de capture des matières en suspension de l'ordre de 85 %. Les boues concentrées obtenues sont ensuite soumises à une étape de génération, la concentration desdites boues étant d'environ 30 à 40 g.l⁻¹.

L'utilisation d'un flottateur monte en boucle permet de tripler ou quadruple la concentration en biomasse, notamment par rapport au procédé "contact-stabilisation" utilisé dans l'Art antérieur, et de réaliser ainsi des gains de volumes d'aération importants.

## Revendications

1. Procédé de traitement des eaux par boues activées comprenant essentiellement :
   – un processus de dépollution desdites eaux incluant :
      . une étape d'oxydation des pollutions carbonées des eaux à traiter, sous conditions aérobies,
      . une étape de nitrification desdites eaux sous conditions aérobies, pour produire un mélange d'eau traitée et de boues activées, éventuellement associée à une étape de dénitrification sous conditions anaérobies et/ou à une étape de déphosphatation sous conditions d'anaérobiose stricte, et
      . une étape de séparation de l'eau traitée desdites boues activées, et
   – un processus de production d'âge de boues, lequel procédé est caractérisé en ce qu'avant de recycler les boues dans au moins un processus de dépollution, il comprend :
      . une étape de concentration desdites boues par flottation au moyen d'air comprimé, réalisée en amont du processus de production d'âge des boues.

2. Procédé selon la revendication 1, caractérisé en ce que la flottation est réalisée par pressurisation directe ou indirecte de l'eau à traiter.

3. Procédé selon la revendication 1 ou la revendication 2, caractérisé en ce que la phase de boues concentrées est recyclée dans une étape d'initiation se déroulant dans des conditions d'anaérobiose stricte, dans laquelle l'oxygène desdites boues est épuisé.

4. Procédé selon l'une quelconque des revendications 1 à 3, comprenant une étape de nitrification éventuellement associée à une étape de dénitrification, caractérisé en ce qu'au moins une étape de génération se déroule dans des conditions aérobies.

5. Procédé selon l'une quelconque des revendication 1 à 4, appliqué à l'étape de dénitrification associée à l'étape de nitrification, caractérisé en ce que les boues concentrées de l'étape de génération sont diluées par mélange avec de l'eau brute dans des conditions d'anoxie dans lesquelles elles réalisent un processus de réduction des nitrates en azote gazeux, préalablement à leur recyclage dans au moins un processus de dépollution.

6. Procédé selon l'une quelconque des revendications 1 à 5, comprenant une étape de déphosphatation, caractérisé en ce que les boues concentrées initiées dans des conditions d'anaérobiose stricte sont introduites dans une charge d'eau brute à traiter, dans des conditions anaérobies, préalablement à leur recyclage dans au moins un processus de dépollution.

7. Installation ou station d'épuration d'eau comprenant :
   – au moins un bassin de réaction dans lequel se déroulent des réactions de dépollution carbonée des eaux à traiter,
   – au moins un clarificateur dans lequel les boues et l'eau épurée sont séparées,
   – au moins un bassin de génération et/ou d'initiation, dans lequel est réalisé l'âge des boues et/ou l'initiation propre à permettre la déphosphatation biologique,
   laquelle installation est caractérisée en ce qu'elle comprend en outre au moins un appareillage de concentration des boues, monté en boucle entre au moins un bassin réactionnel et au moins un bassin de génération et/ou d'initiation, sur la ligne de traitement des eaux.

8. Installation selon la revendication 7, caractérisée en ce que le moyen de concentration desdites boues est constitué par au moins un flottateur.

9. Installation selon l'une quelconque des revendications 7 ou 8, appliquée à la nitrification et/ou à la dénitrification, caractérisée en ce que le ou au moins un flottateur est associé à au moins un bassin de génération fonctionnant dans des conditions aérobies.

10. Installation selon l'une quelconque des revendications 7 ou 8, appliquée à la dénitrification, caractérisée en ce que le ou au moins un bassin de génération est associé à une zone d'anoxie, placée en tête de la station d'épuration d'eau.

11. Installation selon l'une quelconque des revendications 7 ou 8, appliquée à la déphosphatation, caractérisée en ce que le ou au moins un flottateur est associé avec au moins un bassin d'initiation fonctionnant dans des conditions d'anaérobiose stricte, lequel bassin est relié à un bassin fonctionnant dans des conditions anaérobies, placé en tête de la station d'épuration d'eau.

12. Installation selon l'une quelconque des revendications 7 ou 8, appliquée à la nitrification et/ou la dénitrification associée(s) à la déphosphatation, caractérisée en ce qu'au moins un flottateur est associé avec au moins un bassin de génération fonctionnant dans des conditions aérobies et avec au moins un bassin d'initiation fonctionnant dans des conditions anaérobies.

13. Installation selon l'une quelconque des revendications 7 ou 8, appliquée à la nitrification et/ou la dénitrification associée(s) à la déphosphatation, caractérisée en ce que ledit appareillage comprend la combinaison d'au moins un flottateur associé à au moins un bassin de génération fonctionnant dans des conditions aérobies, avec au moins un flottateur associé à au moins un bassin d'initiation fonctionnant dans des conditions anaérobies.

14. Installation selon la revendication 13, caractérisée en ce que les bassins de génération et/ou d'initiation sont alimentés simultanément en boues concentrées recyclées du flottateur.

15. Installation selon la revendication 13, caractérisée en ce que les bassins de génération et/ou d'initiation sont alimentés en alternance en boues concentrées recyclées du flottateur.

16. Installation selon l'une quelconque des revendications 7 à 15, caractérisée en ce qu'un bac de floculation est prévu entre le bassin de réaction et le clarificateur.

17. Installation selon la revendication 16, caractérisée en ce que le bac de floculation est associé avec au moins un flottateur.


**Patentansprüche**

1. Verfahren zur Behandlung von Wasser mittels Belebtschlammen, das im wesentlichen folgendes umfaßt:
   – einen Reinigungsprozeß des Wassers, mit:
      . einer Oxydationsstufe für kohlenstoffhaltige Verunreinigungen des zu behandelnden Wassers unter aeroben Verhältnissen,
      . einer Nitrifikationsstufe für das Wasser unter aeroben Verhältnissen, um eine Mischung behandelten Wassers und von Belebtschlammen zu erzeugen, gegebenenfalls verbunden mit einer Denitrifikationsstufe unter anaeroben Verhältnissen und/oder mit einer Entphosphatierungsstufe unter Verhältnissen strikter Anaerobiose und
      . einer Trennungsstufe für das mit den Belebtschlammen behandelte Wasser und
   – einen Schlammreifegewinnungsprozeß, wobei das Verfahren dadurch gekennzeichnet ist, daß dieses vor dem Zurückführen der Schlamme in zumindest einen Reinigungsprozeß folgendes umfaßt:
      . eine Konzentrationsstufe für die Schlamme durch Flotation mittels Druckluft, die stromaufwärts von der Schlammreifegewinnungsstufe durchgeführt wird.

2. Verfahren nach Anspruch 1, dadurch gekennzeichnet, daß die Flotation durch unmittelbares oder mittelbares Druckbeaufschlagen des zu behandelnden Wassers durchgeführt wird.

3. Verfahren nach Anspruch 1 oder Anspruch 2, dadurch gekennzeichnet, daß die Phase konzentrierter Schlamme in eine Anregestufe zurückgeführt wird, die in Verhältnissen strikter Anarobiose, in welcher der Sauerstoff der Schlamme erschöpft ist, verläuft.

4. Verfahren nach irgendeinem der Ansprüche 1 bis 3, mit einer Nitrifikationsstufe, gegebenenfalls verbunden mit einer Denitrifikationsstufe, dadurch gekennzeichnet, daß zumindest eine Generationsstufe in aeroben Verhältnissen verläuft.

5. Verfahren nach irgendeinem der Ansprüche 1 bis 4, angewandt auf die Denitrifikationsstufe verbunden mit der Nitrifikationsstufe, dadurch gekennzeichnet, daß die konzentrierten Schlamme der Generationsstufe durch Mischen mit dem Rohwasser bei völligem Sauerstoffmangel verdünnt werden, bei welchem sie einen Reduktionsprozeß der Nitrate in gasförmigen Stickstoff vor ihrem Zurückführen in zumindest einen Reinigungsprozeß durchführen.

6. Verfahren nach irgendeinem der Ansprüche 1 bis 5, mit einer Entphosphatierungsstufe, dadurch gekennzeichnet, daß die konzentrierten, in Verhältnissen strikter Anaerobiose angeregten Schlamme in eine zu behandelnde Rohwassercharge in anaeroben Verhältnissen, vor ihrem Zurückführen in zumindest einen Reinigungsprozeß eingeführt werden.

7. Wasserreinigungsanlage - oder -werk, mit

– zumindest einem Reaktionsbecken, in welchem Kohlenstoffreinigungsreaktionen für das zu behandelnde Wasser verlaufen,

– zumindest einem Klärer, in welchem die Schlamme und das gereinigte Wasser getrennt sind,

– zumindest einem Generations- und/oder Anregebecken, in welchem die Schlammreife und/oder das geeignete Anregen zur Ermöglichung der biologischen Entphosphatierung durchgeführt werden,

wobei die Anlage dadurch gekennzeichnet ist, daß außerdem zumindest eine Schlammkonzentrierungseinrichtung vorgesehen ist, die im Kreislauf zwischen zumindest einem Reaktionsbecken und zumindest einem Generationsbecken und/oder Anregebecken auf der Linie der Wasserbehandlung angebracht ist.

8. Anlage nach Anspruch 7, dadurch gekennzeichnet, daß das Mittel zur Schlammkonzentrierung durch zumindest ein Flotationsgeräte gebildet ist.

9. Anlage nach einem der Ansprüche 7 oder 8, angewandt auf die Nitrifikation und/oder auf die Denitrifikation, dadurch gekennzeichnet, daß das oder zumindest ein Flotationsgerät mit zumindest einem Generationsbecken, das in aeroben Verhältnissen arbeitet, verbunden ist.

10. Anlage nach einem der Ansprüche 7 oder 8, angewandt auf die Denitrifikation, dadurch gekennzeichnet, daß das oder zumindest ein Generationsbecken mit einem an dem vorderen Abschnitt des Wasserreinigungswerkes gelegenen Bereich völligen Sauerstoffmangels verbunden ist.

11. Anlage nach einem der Ansprüche 7 oder 8, angewandt auf die Entphosphatierung, dadurch gekennzeichnet, daß das oder zumindest ein Flotationsgerät mit zumindest einem Anregebecken, das in Verhältnissen strikter Anaerobiose arbeitet, verbunden ist, wobei das Becken mit einem in anaeroben Verhältnissen arbeitenden, an dem vorderen Abschnitt des Wasserreinigungswerkes gelegenen Becken verbunden ist.

12. Anlage nach einem der Ansprüche 7 oder 8, angewandt auf die Nitrifikation und/oder die Denitrifikation verbunden (beide) mit der Entphosphatierung, dadurch gekennzeichnet, daß zumindest ein Flotationsgerät mit zumindest einem Generationsbecken, das in aeroben Verhältnissen arbeitet und mit zumindest einem Anregebecken, das in anaeroben Verhältnissen arbeitet, verbunden ist.

13. Anlage nach einem der Ansprüche 7 oder 8, angewandt auf die Nitrifikation und/oder die Denitrifikation, (beide) verbunden mit der Entsphosphatierung, dadurch gekennzeichnet, daß die Einrichtung die Kombination von zumindest einem Flotationsgerät verbunden mit zumindest einem Generationsbecken, das in aeroben Verhältnissen arbeitet, mit zumindest einem Flotationsgerät, verbunden mit zumindest einem Anregebecken, das in anaeroben Verhältnissen arbeitet, aufweist.

14. Anlage nach Anspruch 13, dadurch gekennzeichnet, daß die Generations- und/oder Anregebecken gleichzeitig mit von dem Flotationsgerät zurückgeführten konzentrierten Schlammen versorgt werden.

15. Anlage nach Anspruch 13, dadurch gekennzeichnet, daß die Generations- und/oder Anregebecken abwechselnd mit von dem Flotationsgerät zurückgeführten konzentrierten Schlammen versorgt werden.

16. Anlage nach einem der Ansprüche 7 bis 15, dadurch gekennzeichnet, daß ein Flockungsbehälter zwischen dem Reaktionsbecken und dem Klärer vorgesehen ist.

17. Anlage nach Anspruch 16, dadurch gekennzeichnet, daß der Flockungsbehälter mit zumindest einem Flotationsgerät verbunden ist.

**Claims**

1. Process for water treatment by activated sludge essentially comprising:
– a process for removing the pollution from said waters including:
. a step of oxidation of the carbon pollution of the waters to be treated, under aerobic conditions,
. a step of nitrification of said waters under aerobic conditions, to produce a mixture of treated water and activated sludge, possibly combined with a step of denitrification under anaerobic conditions and/or with a step of dephosphatation under conditions of strict anaerobiosis, and
. a step of separation of the treated water from said activated sludge, and
– a process for the production of sludge age, said process being characterized in that, before recycling the sludge to at least one depollution process, it comprises:
. a step of concentration of said sludge by flotation by means of compressed air, carried out upstream from the sludge age production process.

2. Process as claimed in Claim 1, characterized in that the flotation is carried out by direct or indirect pressurization of the water to be treated.

3. Process as claimed in Claim 1 or Claim 2, characterized in that the concentrated sludge phase is recycled to an initiation step taking place in conditions of strict anaerobiosis, in which the oxygen in the said sludge is exhausted.

4. Process as claimed in any one of Claims 1 to 3, comprising a nitrification step possibly combined with

EP 0 309 352 B1

a denitrification step, characterized in that at least one generation step takes place in aerobic conditions.

5. Process as claimed in any one of Claims 1 to 4, applied to the denitrification step combined with the nitrification step, characterized in that the concentrated sludge of the generation step is diluted by mixing with raw water in conditions of anoxia in which they achieve a process of the reduction of the nitrates to gaseous nitrogen, prior to their recycling to at least one depollution process.

6. Process as claimed in any one of Claims 1 to 5, comprising a dephosphatation step, characterized in that the concentrated sludge initiated in conditions of strict anaerobiosis is introduced into a raw water feed to be treated, in anaerobic conditions, prior to being recycled to at least one depollution process.

7. Water purification installation or station comprising:
– at least one reaction tank in which the reactions of carbon depollution of the water to be treated takes place,
– at least one clarifier in which the sludge and the purified water are separated,
– at least one generation and/or initiation tank, in which the sludge age and/or initiation is obtained, capable of allowing biological dephosphatation,
which installation is characterized in that it also comprises at least one apparatus for sludge concentration, mounted in a loop between at least one reaction tank and at least one generation and/or initiation tank, on the water treatment line.

8. Installation as claimed in Claim 7, characterized in that the means of concentration of said sludge consists of at least one flotation unit.

9. Installation as claimed in any one of Claims 7 or 8, applied to nitrification and/or denitrification, characterized in that the flotation unit (or units) is combined with at least one generation tank operating in aerobic conditions.

10 Installation as claimed in any one of Claims 7 or 8, applied to denitrification, characterized in that the generation tank (or tanks) is combined with an anoxia zone, placed at the head end of the water purification station.

11. Installation as claimed in any one of Claims 7 or 8, applied to dephosphatation, characterized in the that the flotation unit (or units) is combined with at least one initiation tank operating in conditions of strict anaerobiosis, which tank is connected to a tank operating in anaerobic conditions, placed at the head end of the water purification station.

12. Installation as claimed in any one of Claims 7 or 8, applied to nitrification and/or denitrification combined with dephosphatation, characterized in that at least one flotation unit is associated with at least one generation tank operating in aerobic conditions and with at least one initiation tank operating in anaerobic conditions.

13. Installation as claimed in any one of Claims 7 or 8, applied to nitrification and/or denitrification combined with dephosphatation, characterized in that said apparatus comprises the combination of at least one flotation unit associated with at least one generation tank operating in aerobic conditions, with at least one flotation unit associated with at least one initiation tank operating in anaerobic conditions.

14. Installation as claimed in Claim 13, characterized in that the generation and/or initiation tanks are supplied simultaneously with concentrated sludge recycled from the flotation unit.

15. Installation as claimed in Claim 13, characterized in that the generation and/or initiation tanks are supplied alternately with concentrated sludge recycled from the flotation unit.

16. Installation as claimed in any one of Claims 7 to 15, characterized in that a flocculation tank is provided between the reaction tank and the clarifier.

17. Installation as claimed in Claim 16, characterized in that the flocculation tank is combined with at least one flotation unit.

13

FIGURE 1

EP 0 309 352 B1

FIGURE 2

FIGURE 3

16

FIGURE 4

FIGURE 5